# EUROPÄISCHE PATENTANMELDUNG

(11) **EP 3 683 827 A1**
(43) Veröffentlichungstag der Anmeldung: **22.07.2020**
(21) Anmeldenummer: 20152055.8
(22) Anmeldetag: 15.01.2020
(51) Int. Cl.: H01L 21/68, B25J 9/00

(54) **HYBRIDKINEMATIK MIT SECHS FREIHEITSGRADEN UND VERFAHREN**

(30) Priorität: 16.01.2019 DE 102019101071
(71) Anmelder: Picofine GmbH, 26135 Oldenburg (DE)
(72) Erfinder: Kortschack, Axel, 26121 Oldenburg (DE)
(74) Vertreter: Eisenführ Speiser

(57) **Zusammenfassung**

Die vorliegende Erfindung betrifft das Gebiet der Positionierung und Bewegung von Objekten. Um eine Lösung vorzustellen, die die eine hochauflösende Vorrichtung und ein entsprechendes Verfahren bereitstellt, die sechs Freiheitsgrade mit einem hohen rotarischen Bewegungsbereich ermöglichen, wobei die Vorrichtung eine weitgehend durchgehend hohe mechanische Steifigkeit aufweist, so dass sie auch für hochdynamische Anwendungen geeignet ist, wird eine Vorrichtung vorgeschlagen, mit einer drei lineare Positionierer umfassenden Parallelkinematik mit drei Freiheitsgraden, einer zweidimensionalen Positioniereinheit und einem rotatorischen Positionierer, wobei die linearen Positionierer der Parallelkinematik jeweils mit einer Gelenkkonstruktion mit vier Freiheitsgraden versehen sind, wobei jede Gelenkkonstruktion ein Schubgelenk und/oder eine lineare Führung für einen linearen Freiheitsgrad entlang einer Bewegungsrichtung und ein Rotationsgelenk für drei rotatorische Freiheitsgrade umfasst, wobei die Gelenkkonstruktionen derart angeordnet sind, dass sich die Bewegungsrichtungen der linearen Freiheitsgrade in einem Punkt schneiden und dass die Bewegungsrichtungen der linearen Freiheitsgrade nicht parallel oder anti-parallel zu einer Positionierrichtung des jeweiligen linearen Positionierers verlaufen.

## Beschreibung

Die vorliegende Erfindung betrifft das Gebiet der Positionierung und Bewegung von Objekten und insbesondere das Gebiet der Positionierung und Bewegung von Objekten mit sechs Freiheitsgraden mit einer Auflösung im Mikrometer- oder gar Nanometerbereich.

Es sind Parallelkinematiken und hybride Parallelkinematiken bekannt, die in der Lage sind, ein Objekt im Raum zu positionieren.

Parallelkinematiken unterscheiden sich von klassischen, seriellen Kinematiken, bei denen die Bewegungsachsen hintereinander, also seriell angeordnet sind, insofern, als dass bei Parallelkinematiken die kinematischen Ketten mit den Positionierern funktionell parallel angeordnet sind. Somit greift mehr als ein Positionier bzw. Antrieb auf die zu bewegende Komponente zu, um diese im Raum zu bewegen oder anzuordnen.

Im Falle hybrider Parallelkinematiken liegt eine Mischung aus einer seriellen und einer Parallelkinematik vor.

Aus EP 2 620 977 A2 ist eine entsprechende hybride Parallelkinematik bekannt. Zum Einsatz kommen drei XY-Tische, die so angeordnet sind, dass die jeweils unteren Positionierer auf ein gemeinsames Zentrum ausgerichtet sind, während die jeweils oberen Positionierer des XY-Tisches eine tangentiale Bewegung um einen gemeinsamen virtuellen Kreis aufweisen.

Diese Kinematik kann ein Objekt im Raum mit einer Nanometerauflösung positionieren, jedoch bietet die Kinematik aus EP 2 620 977 A2 insbesondere in Bezug auf die rotatorischen Freiheitsgrade einen eingeschränkten Arbeitsbereich.

Eine andere hybride Parallelkinematik ist aus US 9,694,455 B2 bekannt. Dort wird beschrieben, wie eine Parallelkinematik, die zwei rotarische und einem linearen Freiheitsgrad aufweist und deren längenveränderlichen Streben zwischen zwei Gelenken mit je rotatorischen Freiheitsgraden angeordnet sind, über einen XY-Tisch in der Ebene bewegt werden kann. Am Ende der Parallelkinematik ist ein rotatorischer Positionierer montiert, so dass die Kinematik sechs Freiheitsgrade aufweist. Diese Kinematik bietet einen großen rotatorischen Freiheitsgrad. Jedoch hat die Kinematik aus US 9,694,455 B2 gravierende Nachteile, da Parallelkinematik aufgrund des streben-artigen Aufbaus und dessen Längenänderung während der Positionierung eine stark veränderliche Steifigkeit aufweist, so dass nur ein kleiner Teil des Bewegungsraums tatsächlich für hochauflösende oder gar hochgenaue Bewegungen genutzt werden kann. Darüber hinaus ist die aus US 9,694,455 B1 bekannte Kinematik eher ungeeignet für hochdynamische Anwendungen, da die zwischen den rotatorischen Gelenken angeordneten Positionierer der Parallelkinematik stets geneigt, also mitbewegt werden.

Ein der vorliegenden Erfindung zugrundeliegendes Ziel ist es, sechs Freiheitsgrade mit einem hohen rotatorischen Bewegungsbereich zu erreichen, wobei ebenfalls eine Eignung für hochdynamische Anwendungen gegeben sein soll.

Es ist daher gewünscht, eine Lösung vorzustellen, die eine hochauflösende Vorrichtung und ein entsprechendes Verfahren bereitstellt, die sechs Freiheitsgrade mit einem hohen rotarischen Bewegungsbereich ermöglichen, wobei die Vorrichtung eine weitgehend durchgehend hohe mechanische Steifigkeit aufweist, so dass sie auch für hochdynamische Anwendungen geeignet ist.

Diese Lösung kann, geeignete Positionierer vorausgesetzt, Mikro- und Nanopositionierung erlauben werden, ist aber auch für beliebig andere Positionieraufgaben einsetzbar.

Erfindungsgemäß wird nach einem ersten Aspekt eine Vorrichtung zur Bewegung und/oder Positionierung eines Objekts mit sechs Freiheitsgraden vorgeschlagen, wie sie in Anspruch 1 definiert ist, nämlich mit einer drei lineare Positionierer umfassenden Parallelkinematik mit drei Freiheitsgraden, einer zweidimensionalen Positioniereinheit und einem rotatorischen Positionierer, wobei die linearen Positionierer der Parallelkinematik jeweils mit einer Gelenkkonstruktion mit vier Freiheitsgraden versehen sind, wobei jede Gelenkkonstruktion ein Schubgelenk und/oder eine lineare Führung für einen linearen Freiheitsgrad entlang einer Bewegungsrichtung und ein Rotationsgelenk für drei rotatorische Freiheitsgrade umfasst, wobei die Gelenkkonstruktionen derart angeordnet sind, dass sich die Bewegungsrichtungen der linearen Freiheitsgrade in einem Punkt schneiden und dass die Bewegungsrichtungen der linearen Freiheitsgrade nicht parallel oder anti-parallel zu einer Positionierrichtung des jeweiligen linearen Positionierers verlaufen, wobei die relativ zu einer virtuellen oder tatsächlichen Basis der Parallelkinematik beweglichen Komponenten der linearen Positionierer unabhängig voneinander in den jeweiligen Positionierrichtungen bewegt werden können, die jeweils durch einen ersten Winkel (α₁, α₂, α₃) und einen zweiten Winkel (ϕ₁, ϕ₂, ϕ₃) angegeben sind, wobei jeder der ersten Winkel (α₁, α₂, α₃) eine Neigung der Positionierrichtung gegenüber einer durch die Basis aufgespannten Ebene angibt und einen Wert im abgeschlossenen Intervall von 0° bis 180° oder ein ganzzahliges Vielfaches davon hat, wobei die zweiten Winkel (ϕ₁, ϕ₂, ϕ₃) jeweils einen Winkel zwischen den in die durch die Basis aufgespannten Ebene projizierten Positionierrichtungen zweier benachbarter beweglicher Komponenten angeben und jeweils einen Wert im abgeschlossenen Intervall von 0° bis 180° oder ein ganzzahliges Vielfaches davon haben.

Erfindungsgemäß wird nach einem zweiten Aspekt ein Verfahren zur Bewegung und/oder Positionierung eines Objekts mit sechs Freiheitsgraden vorgeschlagen, wie es in Anspruch 10 definiert ist, nämlich mit einer Vorrichtung, die eine drei lineare Positionierer umfassenden Parallelkinematik mit drei Freiheitsgraden, eine zweidimensionale Positioniereinheit und einen rotatorischen Positionierer umfasst, wobei die linearen Positionierer der Parallelkinematik jeweils mit einer Gelenkkonstruktion mit vier Freiheitsgraden versehen sind, wobei jede Gelenkkonstruktion ein Schubgelenk und/oder eine lineare Führung für einen linearen Freiheitsgrad entlang einer Bewegungsrichtung und ein Rotationsgelenk für drei rotatorische Freiheitsgrade umfasst, wobei die Gelenkkonstruktionen derart angeordnet sind, dass sich die Bewegungsrichtungen der linearen Freiheitsgrade in einem Punkt schneiden und dass die Bewegungsrichtungen der linearen Freiheitsgrade nicht parallel oder anti-parallel zu einer Positionierrichtung des jeweiligen linearen Positionierers verlaufen, wobei die relativ zu einer virtuellen oder tatsächlichen Basis der Parallelkinematik beweglichen Komponenten der linearen Positionierer unabhängig voneinander in den jeweiligen Positionierrichtungen bewegt werden können, die jeweils durch einen ersten Winkel (α₁, α₂, α₃) und einen zweiten Winkel (ϕ₁, ϕ₂, ϕ₃) angegeben sind, wobei jeder der ersten Winkel (α₁, α₂, α₃) eine Neigung der Positionierrichtung gegenüber einer durch die Basis aufgespannten Ebene angibt und einen Wert im abgeschlossenen Intervall von 0° bis 180° oder ein ganzzahliges Vielfaches davon hat, wobei die zweiten Winkel (ϕ₁, ϕ₂, ϕ₃) jeweils einen Winkel zwischen den in die durch die Basis aufgespannten Ebene projizierten Positionierrichtungen zweier benachbarter beweglicher Komponenten angeben und jeweils einen Wert im abgeschlossenen Intervall von 0° bis 180° oder ein ganzzahliges Vielfaches davon haben, wobei das Verfahren im Fall einer Bewegung eine gleichzeitige oder sequentielle Bewegungsansteuerung der Positionierer der Parallelkinematik, der zweidimensionalen Positioniereinheit und/oder des rotatorischen Positionierers umfasst und im Fall einer Positionierung eines gleichzeitige oder sequentielle Einstellung der Positionierer der Parallelkinematik, der zweidimensionalen Positioniereinheit und/oder des rotatorischen Positionierers umfasst.

Im Rahmen der hier vorgeschlagenen Lösung zur hochauflösenden Bewegung oder Positionierung eines Objektes in sechs Freiheitsgraden drei lineare Positionierer im Rahmen einer Parallelkinematik, eine zweidimensionale Positioniereinheit (z.B. ein XY-Tisch oder ein Planar-Antrieb) und ein rotatorischer Positionierer verwendet. Hierbei kann auf dem XY-Tisch mit zwei Positionierern (oder auf dem Planar-Antrieb) eine spezielle Parallelkinematik mit drei Freiheitsgraden eingesetzt werden, welche drei lineare Positionierer aufweist, die alle an einer gemeinsamen Basis direkt oder indirekt befestigt sind. Jeder der drei Positionierer weist eine bewegliche Komponente auf die unabhängig voneinander bewegt werden können. Eine zu bewegende Komponente der Parallelkinematik ist über drei Gelenkkonstruktion mit jeder der beweglichen Komponenten der drei Positionierer verbunden. Die Gelenkkonstruktionen weisen jeweils einen linearen Freiheitsgrad und drei rotatorische Freiheitsgrade auf. Über die Bewegung der drei linearen Positionierer der Parallelkinematik kann so die zu bewegende Komponente der Parallelkinematik mit zwei rotatorischen Freiheitsgraden und einem linearen Freiheitsgrad bewegt werden, wobei der lineare Freiheitsgrad nicht mit einem der zwei Freiheitsgrade des XY-Tisch übereinstimmt. Zusammen mit dem XY-Tisch stehen somit drei translatorische Freiheitsgrade und zwei rotatorische Freiheitsgrade zur Verfügung. Beispielsweise an der beweglichen Kompetente der Parallelkinematik ist ein rotatorischer Positionier befestigt, so dass das System insgesamt drei rotatorische und drei translatorische Freiheitsgrade zur Verfügung stellt.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus den obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration eines ersten Ausführungsbeispiels der erfindungsgemäßen Vorrichtung,
- Fig. 2: schematische Darstellungen der erfindungsgemäßen Vorrichtung des ersten Ausführungsbeispiels auf Fig. 1 in drei verschiedenen Positionen,
- Fig. 3: eine schematische Darstellung zur Illustration eines zweiten Ausführungsbeispiels der erfindungsgemäßen Vorrichtung,
- Fig. 4: schematische Darstellungen eines erfindungsgemäßen Aspekts, der durch ein Federgelenk in Form eines Biegebalkens gegeben ist,
- Fig. 5: schematische Darstellungen eines erfindungsgemäßen Aspekts, der durch ein Federgelenk in Form eines Parallelogramms gegeben ist, und
- Fig. 6: schematische Darstellungen eines erfindungsgemäßen Aspekts, der durch ein Federgelenk in Form eines Doppelparallelogramms gegeben ist.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

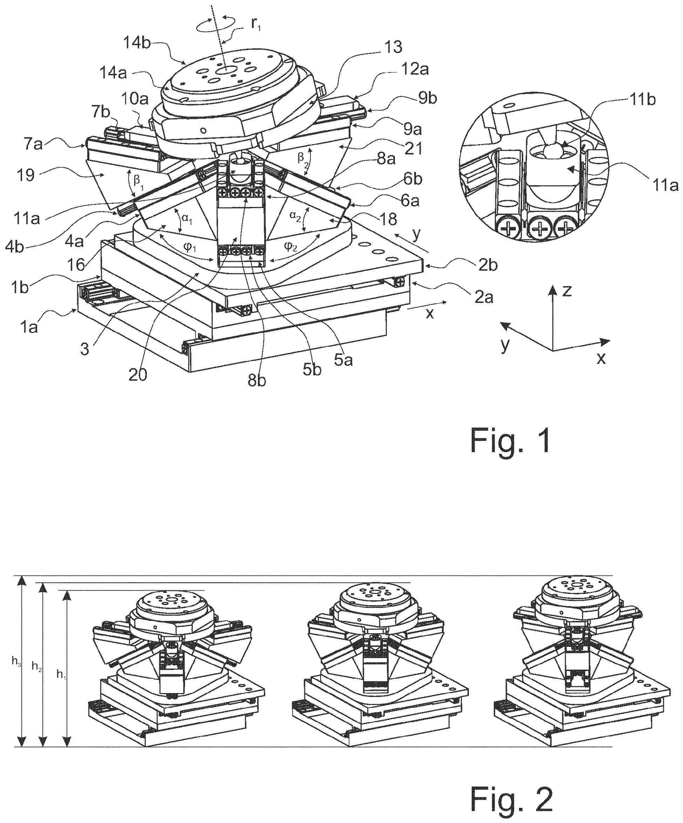

Fig. 1 zeigt eine schematische Darstellung zur Illustration eines ersten Ausführungsbeispiels der erfindungsgemäßen Vorrichtung.

Die Kinematik des ersten Ausführungsbeispiels weist in der Basis einen XY-Tisch auf, bestehend aus zwei linearen Positionierern 1, 2, wobei jeder der zwei Positionierer eine stationäre Komponente 1a, 2a und eine bewegliche Komponenten 1a, 2b aufweist. Anstelle des XY-Tischs mit zwei Positionierern kann auch ein Planar-Antrieb (z.B. luftgelagert, mit magnetischer Lagerung oder basierend auf Wälzkörpern) verwendet werden.

Auf dem XY-Tisch ist die Basis 3 befestigt. Auf dieser Basis 3 sind über die Winkelstücke 16, 17, 18 drei lineare Positionierer 4, 5, 6 befestigt, wobei die Bewegungsrichtungen dieser linearen Positionierer 4, 5, 6 in den Winkeln α₁, α₂ und α₃ zu der vom XY-Tisch aufgespannten XY-Ebene angeordnet sind.

Die Basis 3 selbst ist optional und fällt die Basis 3 weg, können die Positionierer 4, 5, 6 auch direkt oder indirekt mit der beweglichen Komponente 2b des XY-Tisches verbunden werden.

Ebenso gilt, dass auch die Winkelstücke 16, 17, 18 als solche nicht notwendig sind, wobei z.B. Basis 3 oder die bewegliche Komponente 2b des XY-Tisches so geformt sein können, das die Positionierer 4, 5, 6 direkt mit der Basis bzw. der beweglichen Komponente 2b oder über andere Komponenten mit der Basis 3 oder der beweglichen Komponente 2b des XY-Tisches verbunden sind.

Jeder der Positionierer 4, 5, 6 umfasst aus eine stationären (4a, 5a, 6a) und eine hierzu bewegliche Komponente (4b, 5b, 6b).

Grundsätzlich können die Winkel α₁, α₂ und α₃ unterschiedlich zueinander sein, wobei in einer bevorzugten Ausführung die Winkel identisch sind.

Die drei linearen Positionierer 4, 5, 6 sind zueinander in drei Winkeln ϕ₁, ϕ₂, und ϕ₃ (in der Projektion in die X-Y-Ebene) angeordnet, wobei die Winkel jeweils zwischen 0° und 180° (einschließlich) oder einem Vielfachen davon liegen. In dem in Fig. 1 dargestellten Fall liegen diese Winkel jeweils bei 120°.

Wenn die Winkel ϕ₁, ϕ₂, und ϕ₃ alle gleich 0° oder 180° sind, müssen die Winkel α₁, α₂ und α₃, mit dem die Positionierer 4, 5, 6 zur Basis 3 angeordnet sind, ungleich 0° oder ungleich 180° sein, so dass die Bewegungsrichtung der linearen Positionierer nicht in der Ebene oder parallel zur vom XY-Tisch aufgespannten XY-Ebene liegt. Wenn die Winkel ϕ₁, ϕ₂, und ϕ₃ alle gleich 0° oder 180° sind, sind die Winkeln α₁, α₂ und α₃ vorzugsweise für alle linearen Positionierer der Parallelkinematik gleich 90°.

An den beweglichen Komponenten der Positionierer 4, 5, 6 sind mit den Winkeln β₁, β₂ und β₃ jeweils lineare Schubgelenkte 7, 8, 9 einer Gelenkkonstruktion, die vier Freiheitsgrade aufweist (drei rotatorische Freiheitsgrade und einen linearen Freiheitsgrad), befestigt.

Die Schubgelenke 7, 8, 9 haben jeweils eine stationäre Komponente 7a, 8a, 9a und eine hierzu bewegliche Komponente 7b, 8b, 9b.

Die Befestigung der stationären Komponenten 7a, 8a, 9a der Schubgelenke 7, 8 ,9 kann entweder direkt oder über ein Zwischenstück erfolgen, wobei beispielhafte Zwischenstücke in der Fig. 1 mit 19, 20 und 21 gekennzeichnet sind.

Grundsätzlich können die zwischen dem jeweiligen Positionierer 4, 5, 6 und dem entsprechenden Schubgelenk 7, 8, 9 vorliegenden Winkel β₁, β₂ und β₃ für jede der Gelenkkonstruktionen individuell gewählt werden, wobei jedoch die Bewegungsrichtungen der Schubgelenke 7, 8, 9 nicht parallel zu der Bewegungsrichtung des jeweiligen linearen Positionierers 4, 5, 6 sein dürfen.

Vorzugsweise sind, wie in der dargestellten Ausführung, die Winkel β₁, β₂ und β₃ alle gleich.

In der in Fig. 1 beispielhaft dargestellten Vorrichtung werden die drei rotatorischen Freiheitsgrade der Gelenkkonstruktion über je ein Kugelgelenk 10, 11, 12 realisiert. Die drei rotatorischen Kugelgelenke 10, 11, 12 der Gelenkkonstruktion sind mit einer von der Parallelkinematik zu bewegenden Komponente 13 verbunden.

In der Fig. 1 ist eines der vereinfacht dargestellten Kugelgelenke in der teilvergrößerten Ansicht dargestellt. Jedes der Kugelgelenke hat eine jeweilige stationäre Komponente 10a, 11a, 12a und eine dazu bewegliche Komponente 10b, 11b, 12b.

An der von der Parallelkinematik zu bewegenden Komponente 13 ist eine stationäre Komponente 14a eines rotatorischen Positionierers 14 befestigt, an dessen beweglicher Komponenten 14b ein über die hybride Parallelkinematik zu bewegendes Objekt befestigt werden kann, welches in der Fig. 1 jedoch nicht dargestellt ist.

Eine Drehachse r₁ des rotatorischen Positionierers 14 wird im Wesentlichen entlang der XY-Richtung über den XY-Tisch eingestellt und die Rotation um die X-Achse und um die Y-Achse, sowie die Höhe auf der sich der rotatorische Positionier 14 befindet, über die Positionen der drei linearen Positionier 4, 5, 6.

Fig. 2 zeigt schematische Darstellungen der erfindungsgemäßen Vorrichtung des ersten Ausführungsbeispiels auf Fig. 1 in drei verschiedenen Positionen.

Fig. 2 zeigt die anhand der Fig. 1 erläuterte Vorrichtung in einer horizontalen Ausrichtung der beweglichen Komponente 14b. Links in einer Position, bei der die Parallelkinematik die bewegliche Komponente 14b mit der Höhe h₁ tief ausrichtet. Rechts steht die bewegliche Komponente 14b in einer hohen Position h₃ und in der Mitte ist die Situation dargestellt, zu der die bewegliche Komponente 14b in einer mittleren Position h₂ zwischen den zwei anderen Positionen steht.

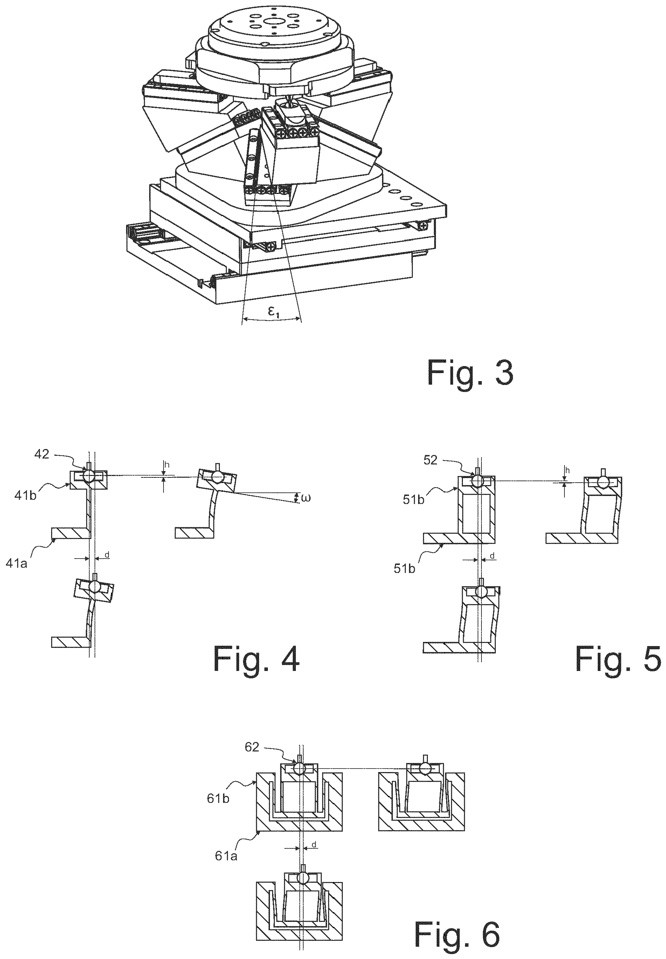

Fig. 3 zeigt eine schematische Darstellung zur Illustration eines zweiten Ausführungsbeispiels der erfindungsgemäßen Vorrichtung.

In Fig. 3 ist eine hybride Parallelkinematik als Beispiel einer erfindungsgemäßen Vorrichtung illustriert, die weitgehend der hybriden Parallelkinematik entspricht, die in den Fig. 1 und 2 dargestellt ist, so dass hier lediglich der Unterschied adressiert wird, wobei der Übersichtlichkeit halber die entsprechenden Bezugszeichen nicht erneut eingetragen sind.

Anders als bei dem ersten Ausführungsbeispiel sind die linearen Schubgelenke der Gelenkkonstruktion um einen Winkel ε gegenüber den linearen Positionierern verdreht. Dieser Winkel kann einen beliebigen Wert annehmen und für die drei Paare von Positionier und Schubgelenk individuell gewählt werden.

In bevorzugten Bauformen der erfindungsgemäßen Vorrichtung sind die linearen Positionierer oder die Bewegungsrichtung der linearen Freiheitsgrade der Gelenkstruktur der Parallelkinematik so ausgerichtet, dass sich deren Bewegungsvektoren in einem Punkt schneiden. In einer besonders vorteilhaften Ausführung schneiden sich sowohl die Vektoren der Bewegungsrichtung der linearen Positionierer der Parallelkinematik als auch die Vektoren der Bewegung der linearen Freiheitsgrade der Gelenkstrukturen.

Es ist möglich, dass die Gelenkkonstruktion jeweils mit einer linearen Führung zu versehen, die z.B. mit Wälzlagern, magnetischen Lagern, Gleitlagern oder Luftlagern realisiert werden.

Um eine besonders hohe Bewegungsauflösung der Kinematik zu ermöglichen und eine besonders kompakte Bauform zu erzielen, ist es vorteilhaft wenn das lineare Schubgelenk der jeweiligen Gelenkkonstruktion über ein flexibles Gelenk realisiert wird. Dabei kann es sich beispielsweise um einen einfachen Biegebalken handeln, wie in Fig. 4 gezeigt.

Fig. 4 zeigt schematische Darstellungen eines erfindungsgemäßen Aspekts, der durch ein Federgelenk in Form eines Biegebalkens gegeben ist.

Im Einsatz kommt es zu einem Verbiegen der Federstruktur, so dass sich eine bewegliche Komponente des Schubgelenks 41b gegenüber der stationären Komponente 41a verschiebt, so dass das Kugelgelenk 42 entsprechend um eine Stecke d mitbewegt wird. Nachteilig an einem derartigen einfachen Federgelenk ist jedoch, dass es auch zu einer Störbewegung um die Stecke h und ein Verkippen um den Winkel ω kommt.

Fig. 5 zeigt schematische Darstellungen eines erfindungsgemäßen Aspekts, der durch ein Federgelenk in Form eines Parallelogramms gegeben ist.

Gegenüber der in Fig. 4 gezeigten Ausführung wird ein Federgelenk in Form eines Parallelogramms bevorzugt, welches keine Verdrehung mehr aufweist. Ein entsprechendes Beispiel ist in der Fig. 5 dargestellt.

Allerdings besteht bei dem Federgelenk in Form des Parallelogramms mit stationärer Komponente 51a und beweglicher Komponente 51b noch immer ein Nachteil dahingehend, dass es (wie schon im Fall von Fig. 4) zu einem Höhenversatz h des Kugelgelenks 52 kommt.

Fig. 6 zeigt schematische Darstellungen eines erfindungsgemäßen Aspekts, der durch ein Federgelenk in Form eines Doppelparallelogramms gegeben ist.

Um im Gegensatz zum Fall von Fig. 5 auch einen Höhenversatz zu verhindern, kann der Aufbau eines Federgelenks in Form eines Doppelparallelogramms genutzt werden, wie beispielsweise in Fig. 6 dargestellt.

Ein solches Federgelenk mit stationärer Komponente 61a und beweglicher Komponente 61b weist kaum noch parasitäre Bewegungen des Kugelgelenks 62 auf.

Selbstverständlich können viele weitere Federgelenkstrukturen gewählt und genutzt werden.

Auch im Falle eines flexiblen Gelenks weist das Schubgelenk einen stationären Anteil (vergleiche 41a, 51a, 61a) und einen beweglichen Anteil (vergleiche 41b, 51b und 61 b) auf, wobei der bewegliche Anteil vorzugsweise jeweils an ein Kugelgelenk angebunden ist.

Es ist möglich, dass die Positionen der linearen Positionierer mit den Positionen der linearen Schubgelenke der Gelenkkonstruktion getauscht werden, ohne dass das durch die Funktion der Kinematik gestört wird. Ein solcher Ausstauch ist allerdings nicht möglich, wenn die Bewegungsrichtungen der drei linearen Positionierer 4, 5, 6 parallel zueinander ausgerichtet sind.

Eine erfindungsgemäße Kinematik auch kann so angeordnet werden, dass die Basis der XY-Tisches als stationär angesehen werden kann, ebenso wie die Komponente 14b.

Grundsätzlich können, wie bereits im Zusammenhand mit dem ersten Ausführungsbeispiel erläutert, die Freiheitsgrade der linearen Positionierer 4, 5, 6 zueinander parallel ausgerichtet werden.

Sollen hohe Lasten mit der Kinematik bewegt werden, ist es sinnvoll, das Kugelgelenk der jeweiligen Gelenkkonstruktion über Wälzkörper oder Luftlager zu führen, wobei dann in der Regel auch das Schubgelenk per Wälzkörper oder Luftlager geführt wird. Bei geringen Lasten und der Anforderung, sehr hohe Bewegungsauflösung zu erzielen, ist der Einsatz eines rotatorischen Gleitlagers zu bevorzugen, insbesondere dann, wenn der Aufbau kompakt sein soll, ist ein entsprechendes Gleitlager zu bevorzugen, bei dem eine präzise geschliffene Kugel mit vorzugsweise drei Auflagepunkten in einem stationären Halter gefasst wird. Interessant für die Nanopositionierung ist auch der Einsatz von Federgelenken mit drei rotatorischen Freiheitsgraden, insbesondere dann, wenn auch die Schubgelenke ebenfalls mit Federgelenken realisiert werden. Jedoch aufgrund des relativ großen Bauraums und dem komplexen Aufbau solcher Federgelenke dürfte ein Gleitlager in der Regel bevorzugt werden.

Es ist möglich, den rotatorischen Positionier 14 nicht am Ende der kinematischen Kette zu platzieren, sondern diesen direkt als erstes in die kinematische Kette, also noch vor dem XY-Tisch anzuordnen, ohne dass dadurch der erfinderische Gedanke gestört wird.

Ebenso ist es möglich, den rotatorischen Positionier 14 zwischen den XY-Tisch und der Parallelkinematik anzuordnen. Hiermit ist jedoch eine kompliziertere Führung der elektrischen Versorgung, z.B. über mitgeschleppte Kabel oder Drehkupplungen, verbunden, so dass eine Anordnung des rotatorischen Positionierers am Beginn oder am Ende der kinematischen Kette bevorzugt wird.

Darüber hinaus kann der XY-Tisch auch zwischen der Parallelkinematik und dem rotatorischen Positionier 14 bzw. der zu bewegenden Komponente 13 angeordnet sein, oder eben auch ganz am Ende der kinematischen Kette mit der beweglichen Komponente 14b des rotatorischen Positionierers 14 verbunden sein.

Ohne vom erfinderischen Gedanken abzuweichen, kann auch die Gelenkkonstruktion so angeordnet werden, dass die rotatorischen Freiheitsgrade 10, 11, 12 mit den beweglichen Komponenten 14b, 15b, 16b der linearen Positionierern 14, 15, 16 verbunden sind und die linearen Freiheitsgrade der Gelenkkonstruktion mit der von der Parallelkinematik zu bewegenden Komponenten 13.

Insbesondere Positionierer mit einer hohen Steifigkeit, wie z.B. piezobasierte Positionierer, erlauben es, neben Wälzlagern auch Gleitlager einzusetzen und dabei eine Bewegungsauflösung im Sub-Nanometerbereich zu erzielen. Es können aber auch andere Positionierer eingesetzt werden, wie z.B. elektromagnetische Direktantriebe, Spindelantriebe, hydraulische oder pneumatische Antrieb, etc.

In einer Ausgestaltung einer erfindungsgemäßen Vorrichtung (siehe Fig. 1) zur Bewegung eines Objektes mit sechs Freiheitsgraden wird dieses über fünf lineare Positionierer 1, 2, 4, 5, 6 und einen rotatorischen Positionier 14 bewegt wird. Hierbei ist ein Teil der Kinematik als Parallelkinematik mit drei Freiheitsgraden ausgeführt, und zwar derart, dass diese Parallelkinematik drei lineare Positionierer 4, 5, 6 aufweist, die alle an einer Basis 3 befestigt sind, wobei die relativ zur dieser Basis 3 beweglichen Komponenten 4b, 5b, 6b der linearen Positionierer 4, 5, 6 unabhängig voneinander bewegt werden können, und zueinander in Winkeln α₁, α₂, α₃ und ϕ₁, ϕ₂, ϕ₃ angeordnet sind. Die Winkel α₁, α₂, α₃ legen fest, in welchem Winkel die Bewegungsrichtungen der jeweiligen Positioniere 4, 5, 6 zur der von den Bewegungsrichtungen der Positionierern 1, 2 aufgespannten XY-Ebene stehen, wobei diese Winkel zwischen 0° und 180°, oder ein Vielfaches davon, betragen dürfen, und wobei die Positionierer zueinander in den Winkel ϕ₁, ϕ₂, und ϕ₃ stehen, wobei die Winkel ϕ₁, ϕ₂, und ϕ₃ auf beliebigen Wert zwischen 0° und 180° (oder ein Vielfaches davon) eingestellt werden dürfen, wobei wiederum die Winkel ϕ₁, ϕ₂, und ϕ₃ keinen Wert von 0° oder 180° einnehmen dürfen, wenn bereits die Winkel (α₁, α₂, α₃) auf 0° oder 180° fixiert sind. Jede bewegliche Komponente 4b, 5b, 6b ist jeweils mit einer eigenen Gelenkkonstruktion mit vier Freiheitsgraden verbunden, wobei die Gelenkkonstruktionen jeweils einen linearen Freiheitsgrad als Schubgelenk 7, 8, 9 und jeweils ein Kugelgelenk 10, 11, 12 mit jeweils drei rotatorische Freiheitsgraden aufweisen, wobei jede dieser Gelenkkonstruktionen an einer beweglichen Komponente 13 befestigt ist, die über die Bewegung der linearen Positioniere 4, 5, 6 mit zwei rotatorischen und einem linearen Freiheitsgrad im Raum bewegt werden kann, wobei die Bewegungsrichtungen der linearen Freiheitsgrade der Gelenkstrukturen so ausgerichtet sind, dass sich deren Bewegungsvektoren in einem Punkt schneiden, und wobei die linearen Schubgelenke 7, 8, 9 der Gelenkkonstruktion jeweils in einem Winkel β₁, β₂, β₃ zur den Positionierern 4, 5, 6 angeordnet sind, wobei die Winkel β₁, β₂ und β₃ ungleich 0° oder 180° sind. Die Parallelkinematik kann hierbei über zwei lineare Positionierer 1, 2 in einer Ebene verschoben werden und an der beweglichen Platte 13 der Parallelkinematik ist ein rotatorische Positionier 14 befestigt, der wiederum seine bewegliche Komponente 14b drehen kann.

Bei einer vergleichbaren Ausgestaltung der Vorrichtung kommt anstatt des XY-Tisches, der über die linearen Positionierer 1, 2, gebildet wird, ein Planar-Antrieb zum Einsatz.

Bei Weiterbildungen solcher Ausgestaltungen sind die Positionierer 4, 5, 6 der Parallelkinematik so ausgerichtet, dass deren Bewegungsvektoren sich in einem Punkt schneiden, wobei vorzugsweise die Parallelkinematik drei in ihrer Bewegungsrichtung parallel zueinander ausgerichtete lineare Positionierer 4, 5, 6 aufweist, was bedeutet, dass der Schnittpunkt der Bewegungsvektoren im Unendlichen liegt, wobei die Vektoren der Bewegungsrichtung der drei linearen Positioniere windschief oder orthogonal zu der vom XY-Tisch aufgespannten Ebene liegen.

Bei anderen Weiterbildungen sind die Schubgelenke 7, 8, 9 zu den Positionierern 4, 5, 6 um individuelle Winkeln ε um die orthogonale der durch den XY-Tisch aufgespannten Eben verdreht sind, wobei die Winkel ε vorzugsweise gleich sind.

Bei weiteren Abwandlungen sind die Positionen der Schubgelenke 7, 8, 9 mit den linearen Freiheitsgraden der Position der Positionierer 4, 5, 6 ausgetauscht.

Es kann vorgesehen sein, dass das Schubgelenk über ein Festkörpergelenkt realisiert ist.

Es kann auch vorgesehen sein, dass die drei rotatorischen Freiheitsgrade der Gelenkkonstruktion über flexible Gelenkte realisiert sind.

Es weiterhin vorgesehen sein, dass der rotatorische Positionier in der kinematischen Kette vor der Parallelkinematik angeordnet wird.

Es kann ferner vorgesehen sein, dass der XY-Tisch bzw. der Planar-Antrieb in der kinematischen Kette hinter der Parallelkinematik angeordnet wird.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutieren Kombinationen nicht die einzig möglichen sind. Insbesondere können einander entsprechende Einheiten oder Merkmalskomplexe aus unterschiedlichen Ausführungsbeispielen miteinander ausgetauscht werden.

## Patentansprüche

1. Vorrichtung zur Bewegung und/oder Positionierung eines Objekts mit sechs Freiheitsgraden, mit
einer drei lineare Positionierer (4, 5, 6) umfassenden Parallelkinematik mit drei Freiheitsgraden,
einer zweidimensionalen Positioniereinheit (1, 2) und
einem rotatorischen Positionierer (14),
wobei die linearen Positionierer (4, 5, 6) der Parallelkinematik jeweils mit einer Gelenkkonstruktion mit vier Freiheitsgraden versehen sind,
wobei jede Gelenkkonstruktion ein Schubgelenk (7, 8, 9, 41a, 41b, 51a, 51b, 61a, 61b) und/oder eine lineare Führung für einen linearen Freiheitsgrad entlang einer Bewegungsrichtung und ein Rotationsgelenk (10, 11, 12, 42, 52, 62) für drei rotatorische Freiheitsgrade umfasst,
wobei die Gelenkkonstruktionen derart angeordnet sind, dass sich die Bewegungsrichtungen der linearen Freiheitsgrade in einem Punkt schneiden und dass die Bewegungsrichtungen der linearen Freiheitsgrade nicht parallel oder anti-parallel zu einer Positionierrichtung des jeweiligen linearen Positionierers verlaufen,
wobei die relativ zu einer virtuellen oder tatsächlichen Basis (3) der Parallelkinematik beweglichen Komponenten (4b, 5b, 6b) der linearen Positionierer (4, 5, 6) unabhängig voneinander in den jeweiligen Positionierrichtungen bewegt werden können, die jeweils durch einen ersten Winkel (α₁, α₂, α₃) und einen zweiten Winkel (ϕ₁, ϕ₂, ϕ₃) angegeben sind,
wobei jeder der ersten Winkel (α₁, α₂, α₃) eine Neigung der Positionierrichtung gegenüber einer durch die Basis (3) aufgespannten Ebene angibt und einen Wert im abgeschlossenen Intervall von 0° bis 180° oder ein ganzzahliges Vielfaches davon hat,
wobei die zweiten Winkel (ϕ₁, ϕ₂, ϕ₃) jeweils einen Winkel zwischen den in die durch die Basis (3) aufgespannten Ebene projizierten Positionierrichtungen zweier benachbarter beweglicher Komponenten (4b, 5b, 6b) angeben und jeweils einen Wert im abgeschlossenen Intervall von 0° bis 180° oder ein ganzzahliges Vielfaches davon haben.

2. Vorrichtung nach Anspruch 1,
wobei die zweiten Winkel (ϕ1, ϕ2, ϕ3) keinen Wert von 0° oder einem ganzzahligen Vielfachen von 180° haben, wenn bereits die ersten Winkel (α₁, α₂, α₃) einen Wert von 0° oder einem ganzzahligen Vielfachen von 180° haben, und umgekehrt.

3. Vorrichtung nach einem der vorstehenden Ansprüche,
wobei die Parallelkinematik, die zweidimensionale Positioniereinheit (1, 2) und der rotatorische Positionierer (14) Teil einer kinematischen Kette sind, wobei die kinematische Kette
- die zweidimensionale Positioniereinheit (1, 2), die Parallelkinematik und den rotatorischen Positionierer (14),
- die zweidimensionale Positioniereinheit (1, 2), den rotatorischen Positionierer (14) und die Parallelkinematik,
- die Parallelkinematik, die zweidimensionale Positioniereinheit (1, 2) und den rotatorischen Positionierer (14),
- die Parallelkinematik, den rotatorischen Positionierer (14) und die zweidimensionale Positioniereinheit (1, 2),
- den rotatorischen Positionierer (14), die Parallelkinematik und die zweidimensionale Positioniereinheit (1, 2), oder
- den rotatorischen Positionierer (14), die zweidimensionale Positioniereinheit (1, 2) und die Parallelkinematik,
jeweils in dieser Reihenfolge umfasst.

4. Vorrichtung nach einem der vorstehenden Ansprüche,
wobei die zweidimensionale Positioniereinheit (1, 2) zwei lineare Positionierer (1, 2) oder einen Planar-Antrieb umfasst.

5. Vorrichtung nach einem der vorstehenden Ansprüche,
wobei die Parallelkinematik derart ausgestaltet ist, dass die Positionierrichtungen zueinander parallel oder anti-parallel sind, wobei die Positionierrichtungen windschief oder orthogonal zu einer Positionierebene der zweidimensionalen Positioniereinheit (1, 2) sind, oder
wobei die Parallelkinematik derart ausgestaltet ist, dass sich die Positionierrichtungen in einem Punkt schneiden.

6. Vorrichtung nach einem der vorstehenden Ansprüche,
wobei die Bewegungsrichtungen des Schubgelenks (7, 8, 9, 41a, 41b, 51a, 51b, 61a, 61b) oder der linearen Führung der Gelenkkonstruktionen und die Positionierrichtungen des jeweiligen linearen Positionierers (4, 5, 6) in einer Projektion in eine Positionierebene der zweidimensionalen Positioniereinheit (1, 2) einen jeweiligen Verdrehwinkel (ε₁, ε₂, ε₃) ungleich 0° einschließen, wobei die Verdrehwinkel vorzugweise gleich sind.

7. Vorrichtung nach einem der vorstehenden Ansprüche,
wobei die linearen Positionierer (4, 5, 6), das jeweilige Schubgelenk (7, 8, 9, 41a, 41b, 51a, 51 b, 61a, 61b) oder die jeweilige Führung und das jeweilige Rotationsgelenk (10, 11, 12, 42, 52, 62) in der Parallelkinematik jeweils Teil einer kinematischen Kette sind, wobei das jeweilige Rotationsgelenk (10, 11, 12, 42, 52, 62) an einem Ende der kinematische Kette vorgesehen ist und der jeweilige lineare Positionierer (4, 5, 6) und das jeweilige Schubgelenk (7, 8, 9, 41a, 41b, 51a, 51b, 61a, 61b) oder die jeweilige Führung in beliebiger Reihenfolge vorgesehen sind.

8. Vorrichtung nach einem der vorstehenden Ansprüche,
wobei wenigstens eines der und vorzugweise alle der Schubgelenke (7, 8, 9, 41a, 41b, 51a, 51b, 61a, 61b) als Festkörpergelenk ausgebildet ist/sind.

9. Vorrichtung nach einem der vorstehenden Ansprüche,
wobei die Rotationsgelenke jeweils als Kugelgelenk (10, 11, 12, 42, 52, 62) oder als eine Gelenkkombination ausgestaltet sind.

10. Verfahren zur Bewegung und/oder Positionierung eines Objekts mit sechs Freiheitsgraden mit einer Vorrichtung, die eine drei lineare Positionierer (4, 5, 6) umfassenden Parallelkinematik mit drei Freiheitsgraden, eine zweidimensionale Positioniereinheit (1, 2) und einen rotatorischen Positionierer (14) umfasst, wobei die linearen Positionierer (4, 5, 6) der Parallelkinematik jeweils mit einer Gelenkkonstruktion mit vier Freiheitsgraden versehen sind, wobei jede Gelenkkonstruktion ein Schubgelenk (7, 8, 9, 41a, 41b, 51a, 51b, 61a, 61b) und/oder eine linearen Führung für einen linearen Freiheitsgrad entlang einer Bewegungsrichtung und ein Rotationsgelenk (10, 11, 12, 42, 52, 62) für drei rotatorische Freiheitsgrade umfasst, wobei die Gelenkkonstruktionen derart angeordnet sind, dass sich die Bewegungsrichtungen der linearen Freiheitsgrade in einem Punkt schneiden und dass die Bewegungsrichtungen der linearen Freiheitsgrade nicht parallel oder anti-parallel zu einer Positionierrichtung des jeweiligen linearen Positionierers (4, 5, 6) verlaufen, wobei die relativ zu einer virtuellen oder tatsächlichen Basis (3) der Parallelkinematik beweglichen Komponenten (4b, 5b, 6b) der linearen Positionierer (4, 5, 6) unabhängig voneinander in den jeweiligen Positionierrichtungen bewegt werden können, die jeweils durch einen ersten Winkel (α₁, α₂, α₃) und einen zweiten Winkel (ϕ₁, ϕ₂, ϕ₃) angegeben sind, wobei jeder der ersten Winkel (α₁, α₂, α₃) eine Neigung der Positionierrichtung gegenüber einer durch die Basis (3) aufgespannten Ebene angibt und einen Wert im abgeschlossenen Intervall von 0° bis 180° oder ein ganzzahliges Vielfaches davon hat, wobei die zweiten Winkel ϕ₁, ϕ₂, ϕ₃) jeweils einen Winkel zwischen den in die durch die Basis (3) aufgespannten Ebene projizierten Positionierrichtungen zweier benachbarter beweglicher Komponenten (4b, 5b, 6b) angeben und jeweils einen Wert im abgeschlossenen Intervall von 0° bis 180° oder ein ganzzahliges Vielfaches davon haben,
wobei das Verfahren
im Fall einer Bewegung eine gleichzeitige oder sequentielle Bewegungsansteuerung der Positionierer (4, 5, 6) der Parallelkinematik, der zweidimensionalen Positioniereinheit (1, 2) und/oder des rotatorischen Positionierers (14) umfasst und
im Fall einer Positionierung eine gleichzeitige oder sequentielle Einstellung der Positionierer (4, 5, 6) der Parallelkinematik, der zweidimensionalen Positioniereinheit (1, 2) und/oder des rotatorischen Positionierers (14) umfasst.
